# FASCICULE DE BREVET EUROPEEN

(11) **EP 2 539 901 B1**
(45) Date de publication et mention de la délivrance du brevet: **26.11.2014**
(21) Numéro de dépôt: 11711954.5
(22) Date de dépôt: 23.02.2011
(51) Int. Cl.: F02C 1/05, G21C 1/02, G21C 15/18, G21D 3/06, G21C 15/28

(54) **INSTALLATION DE PRODUCTION D'ENERGIE A PARTIR D'UN REACTEUR NUCLEAIRE RAPIDE A GAZ**
ANLAGE ZUR ENERGIEERZEUGUNG MIT EINEM GASGEKÜHLTEN SCHNELLREAKTOR
FACILITY FOR PRODUCING ENERGY USING A GAS COOLED FAST REACTOR

(30) Priorité: 24.02.2010 FR 1000749
(43) Date de publication de la demande: 02.01.2013
(73) Titulaire: Commissariat à l'Énergie Atomique et aux Énergies Alternatives, 75015 Paris (FR)
(72) Inventeur: TAUVERON, Nicolas, F-38100 Grenoble (FR); BENTIVOGLIO, Fabrice, F-38210 Cras (FR)
(74) Mandataire: Talbot, Alexandre
(86) Numéro de dépôt international: PCT/FR2011/000108
(87) Numéro de publication internationale: WO 2011/104446

(56) Documents cités:
- US-A- 4 466 249
- US-A- 4 576 783
- LYS L A ET AL: "Gas turbine power conversion systems for helium cooled breeder reactors", PROCEEDINGS OF GAS-COOLED REACTOR INFORMATION MEETING, OAK RIDGE NATIONAL LABORATORY,, 1 janvier 1970 (1970-01-01), pages 812-832, XP009139080, cité dans la demande
- MCDONALD C F: "A nuclear gas turbine perspective...the indirect cycle (IDC) offers a practical solution", ENERGY CONVERSION ENGINEERING CONFERENCE, 1996. IECEC 96., PROCEEDINGS OF THE 31ST INTERSOCIETY WASHINGTON, DC, USA 11-16 AUG. 1996, NEW YORK, NY, USA,IEEE, US LNKD- DOI:10.1109/IECEC.1996.553840, vol. 2, 11 août 1996 (1996-08-11), pages 1029-1035, XP010197871, ISBN: 978-0-7803-3547-9
- BENTIVOGLIO F ET AL: "Cathare simulation of transients for the 2400 mw gas fast reactor concept", PROCEEDINGS OF THE ICAPP'09. INTERNATIONAL CONGRESS ON ADVANCES IN NUCLEAR POWER PLANTS. TOKYO, JAPAN, MAY 10-14, 2009,, 10 mai 2009 (2009-05-10), pages 1672-1681, XP009139064, cité dans la demande
- MALO J Y ET AL: "GAS COOLED FAST REACTOR 2400 MWTH, END OF THE PRELIMINARY VIABILITY PHASE", PROCEEDINGS OF THE 2008 INTERNATIONAL CONGRESS ON ADVANCES IN NUCLEAR POWER PLANTS, ICAPP 2008: EMBEDDED TOPICAL MEETING; JUNE 8 - 12, 2008, ANAHEIM, CALIFORNIA,, 8 juin 2008 (2008-06-08), pages 208-218, XP009139136, ISBN: 978-0-89448-061-4
- LIN-GEN C. ET AL: "Power, power density and efficiancy optimization for a closed cycle helium turbine nuclear power plant", ENERGY CONVERSION AND MANAGEMENT, vol. 44, 2003, pages 2393-2401, XP002602395, DOI: 10.1016/S0196-8904(03)00008-6

## Description

### Domaine technique de l'invention

L'invention est relative aux réacteurs nucléaires de quatrième génération, en particulier ceux dits GFR (du terme anglais « Gas-cooled Fast Reactor » - réacteur rapide refroidi par gaz). L'invention concerne plus particulièrement le refroidissement d'un tel réacteur en situation d'accident.

Par réacteur « rapide », on entend un réacteur utilisant un fluide caloporteur qui ne ralentit pas les neutrons émis par la réaction nucléaire et ne comportant pas de modérateur.

### État de la technique

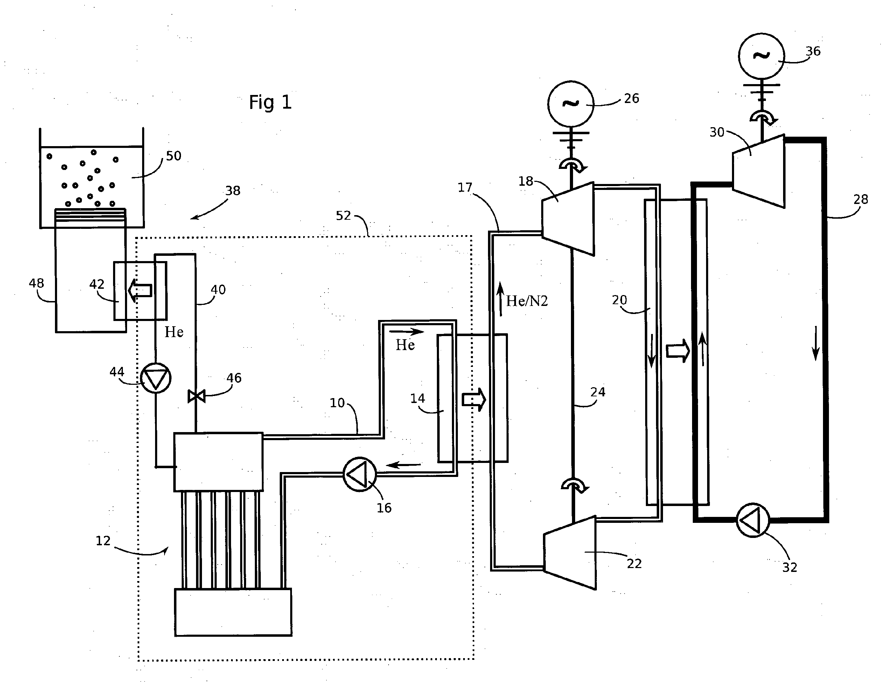

La figure 1 représente une installation de production d'énergie à partir d'un réacteur GFR à cycle indirect combiné, du type étudié dans l'article de la conférence Proceedings of ICAPP '09, Tokyo, Japon, 10-14 mai 2009, P 9378, « CATHARE SIMULATION OF TRANSIENTS FOR THE 2400 MW GAS FAST REACTOR CONCEPT ». Un circuit primaire 10, ayant l'hélium pur comme fluide caloporteur, passe par le coeur d'un réacteur nucléaire 12 et par un échangeur thermique 14. L'hélium est maintenu en circulation par une soufflante 16 alimentée électriquement et placée dans le circuit entre la sortie de l'échangeur 14 et l'entrée du réacteur 12. L'hélium est à une pression de l'ordre de 70 bar. Un enseignement équivalent est présenté dans le document « A Nuclear gas turbine perspective... the indirect cycle (IDC) offers a practical solution » de la conférence Energy Conversion Engineering Conférence 1996 IECEC 96, Washington 11-16 août 1996 et dans le document US 4576783.

Ce type de réacteur, à cycle indirect, se distingue d'un réacteur à cycle direct par le fait que le circuit primaire ne comporte pas de turbine. Le circuit primaire sert simplement à transférer la chaleur du coeur du réacteur 12 vers l'échangeur 14, ce qui facilite le confinement du réacteur et des éléments du circuit primaire, limitant ainsi les risques d'activation, de missiles issus de pertes de pale de la turbine et d'entrée d'eau. Des réacteurs à cycle direct sont présentés dans le document US 4466249 où un circuit primaire passe au travers du réacteur au moyen d'une soufflante actionnée électriquement. La soufflante est reliée électriquement au générateur.

Un circuit secondaire 17, à base d'un mélange d'hélium et d'azote comme fluide caloporteur, passe successivement dans l'échangeur 14, une turbine à gaz 18, un deuxième échangeur 20, et un compresseur 22. La turbine 18 et le compresseur 22 sont montés sur un même arbre 24 qui entraîne également un alternateur 26.

Le mélange d'hélium et d'azote comprend de 50 à 70 % de fraction volumique d'hélium, et le solde en azote. La pression du mélange est de l'ordre de 65 bar en entrée de la turbine 18 et de l'ordre de 40 bar en sortie de la turbine 18.

Un circuit tertiaire 28, à base d'eau en phase vapeur et en phase liquide, passe successivement par l'échangeur 20, une turbine à vapeur 30 et une pompe 32. La turbine à vapeur entraîne un alternateur 36 complétant ainsi la production d'électricité de l'alternateur 26. Cette double source de production d'électricité justifie la dénomination de cycle indirect combiné.

La répartition des puissances générées au niveau des alternateurs 26 et 36 est de l'ordre de 1/3 et 2/3, respectivement.

L'installation est munie d'un circuit de refroidissement de secours 38. Un circuit primaire de secours 40, à base d'hélium, passe par le réacteur 12, un échangeur thermique 42, et une soufflante 44. En fonctionnement normal, ce circuit primaire de secours est coupé par une vanne 46, et la soufflante 44 est à l'arrêt. Un circuit secondaire de secours 48, à base d'eau, passe par l'échangeur 42 et dans une cuve remplie d'eau 50. En général, on prévoit plusieurs circuits de secours redondants.

Le réacteur 12 et les circuits primaires 10 et 40 sont placés dans une enceinte rapprochée 52 elle-même placée dans une enceinte de confinement non représentée ici. L'enceinte rapprochée est destinée à assurer une pression de repli du réacteur suffisante après une brèche, de l'ordre de 5 à 10 bars, et l'enceinte de confinement est destinée à contenir toute fuite vers l'extérieur d'éléments pouvant être activés par le réacteur.

Dans le cas d'un accident affectant le circuit primaire du réacteur, par exemple une brèche s'ouvrant dans la tuyauterie à l'entrée du réacteur, les pressions de l'enceinte rapprochée et du circuit primaire s'égalisent. L'élévation de la pression dans l'enceinte rapprochée est détectée et provoque l'arrêt du réacteur par l'introduction de barres de contrôle dans son coeur. Tous les circuits électriques des circuits principaux sont arrêtés car de forte puissance et donc alimentés par le réseau électrique, alors que le circuit de refroidissement de secours 38 est lui de faible puissance et donc supposé pouvoir être secouru par des alimentations autonomes (groupes électrogènes ou batteries). Les barres de contrôle arrêtent immédiatement la réaction nucléaire, mais il subsiste une production de chaleur résiduelle dans le réacteur qu'il faut évacuer. La vanne 46 du circuit de refroidissement de secours est ouverte, et la soufflante 44 est mise en marche. La chaleur résiduelle du réacteur est ainsi évacuée vers la cuve d'eau 50 par le circuit d'hélium 38, l'échangeur 42, et le circuit d'eau 48.

Ce type d'installation exige ainsi un certain nombre d'opérations à mettre en oeuvre en cas d'accident. Ces opérations peuvent bien entendu être automatisées, mais elles présentent un risque de défaillance d'autant plus élevé que le nombre d'opérations et d'éléments intervenants est élevé.

Le risque de défaillance est augmenté du fait qu'on doit compter sur un dispositif de refroidissement de secours qui reste inutilisé en temps normal. Pour limiter ce risque, on doit procéder à des opérations régulières de vérification et de maintenance du dispositif de refroidissement, qui augmentent le coût d'exploitation.

### Résumé de l'invention

On constate qu'on a besoin de prévoir un système de refroidissement de secours pour un réacteur à gaz, nécessitant peu de maintenance sans pénaliser sa fiabilité.

Pour tendre à satisfaire ce besoin, on prévoit une installation de production d'énergie comprenant un circuit primaire à gaz passant par un réacteur nucléaire, par un premier échangeur-thermique, et par une soufflante. Un circuit secondaire à gaz incondensable passe par le premier échangeur, et par une turbine et un compresseur montés sur un même arbre. La soufflante est entraînée par l'arbre. Les gaz dans les circuits primaire et secondaire sont de même nature, et la pression dans le circuit secondaire est asservie à la pression dans le circuit primaire.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1, précédemment décrite, représente une installation classique à réacteur nucléaire GFR à cycle indirect combiné ;
- la figure 2 représente schématiquement une installation à réacteur GFR ayant une capacité autonome de refroidissement de secours ; et
- les figures 3A à 3D représentent diverses courbes d'évolution de paramètres dans le cas d'un accident affectant l'installation de la figure 2.

### Description d'un mode de réalisation préféré de l'invention

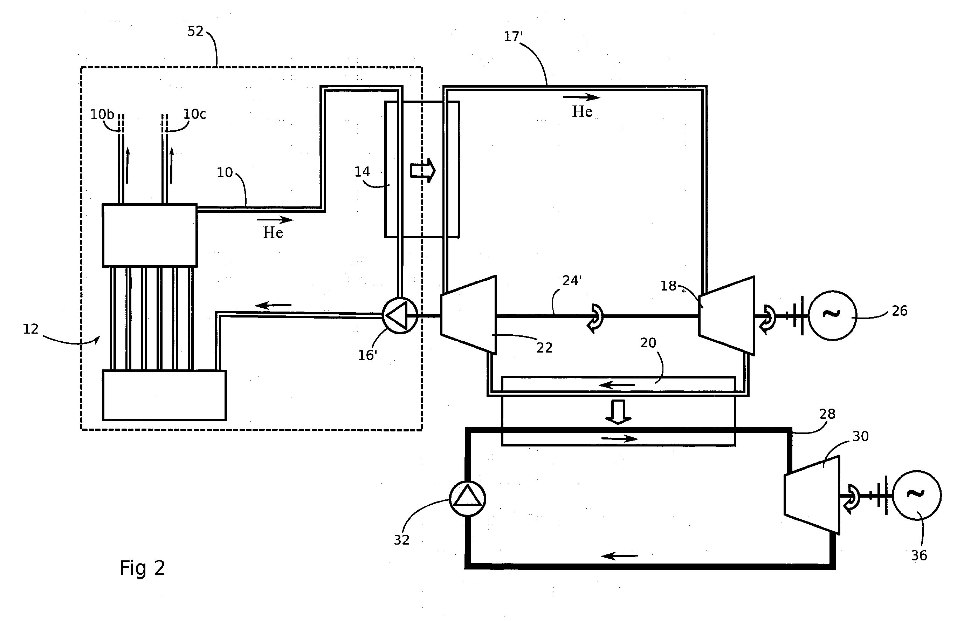

A la figure 2, représentant une installation ayant une capacité autonome et passive de refroidissement de secours, on retrouve des mêmes éléments qu'à la figure 1, désignés par des mêmes références. Par « capacité autonome de refroidissement », on entend que l'installation est capable d'évacuer la chaleur résiduelle du réacteur arrêté, par exemple à la suite d'un accident, sans intervention spécifique d'un opérateur ou d'un automate en dehors de l'arrêt du réacteur et de la déconnexion des alternateurs. Pour ce faire, on utilise pour refroidir le réacteur des éléments servant à la production d'énergie en fonctionnement normal de l'installation.

Une différence par rapport à l'installation de la figure 1 est que la soufflante du circuit primaire 10, ici désignée 16', est entraînée par le même arbre 24' que celui reliant la turbine 18 et le compresseur 22 du circuit secondaire 17'. La soufflante 16' est donc toujours couplée à la turbine 18 du circuit secondaire, et ceci notamment lorsque le réacteur est arrêté en cas d'accident.

Outre une simplification de l'installation du fait qu'on n'a plus besoin d'un moteur séparé pour entraîner la soufflante 16', on verra ci-après que cette configuration permet de se passer du circuit de refroidissement de secours 38 de l'installation classique de la figure 1. Comme on utilise pour le refroidissement de secours des éléments utilisés lors d'un fonctionnement normal, on est sûr que ces éléments sont opérationnels à tout instant. Cela permet d'éviter des opérations de vérification et de maintenance de systèmes prévus pour fonctionner seulement dans des circonstances exceptionnelles.

De préférence, contrairement à l'installation de la figure 1, le gaz dans le circuit secondaire est le même (hélium pur) que dans le circuit primaire, et il est à la même pression (par exemple 70 bar). Avec ce choix, les contraintes d'étanchéité du joint sont relaxées, et sa conception peut être plus simple.

En outre, pour que le joint soit soumis à un différentiel de pression pratiquement nul en toutes circonstances, y compris en situation d'accident, la pression du circuit secondaire est asservie à la pression du circuit primaire. Cet asservissement est réalisé, par exemple, par une simple soupape reliant les circuits primaire et secondaire. En conditions nominales, la soupape est fermée. En condition accidentelle de type dépressurisation du circuit primaire 52, l'écart de pression de part et d'autre de cette soupape est supérieur à la pression de tarage mécanique de la soupape, conduisant cette dernière à s'ouvrir. Dans une version alternative, un jeu de soupapes plus complexe asservirait la pression du circuit 17' à celle du circuit 10 en déchargeant le volume en excès depuis le tuyau 17' du circuit secondaire jusque dans l'enceinte 52.

Pour en outre faire face à tout risque imprévu, on préfère que le circuit de refroidissement de secours soit redondant. Ainsi, dans le cadre de la figure 2, on prévoit de préférence, autour d'un même réacteur 12, plusieurs couples de circuits primaire et secondaire, par exemple trois. On a symbolisé deux départs de circuits primaires redondants 10b et 10c. Les circuits primaires 10, 10b et 10c communiquent entre eux dans le réacteur. Pour des raisons de faisabilité, ces trois circuits primaires ne sont pas isolés les uns des autres dans le réacteur, d'où il résulte qu'une brèche dans l'un des circuits affecte nécessairement les deux autres circuits.

Chaque circuit secondaire redondant est muni de ses propres turbine 18, compresseur 22 et alternateur 26, couplés à un arbre 24' entraînant la soufflante 16' du circuit primaire redondant associé. Le circuit tertiaire 28, quant à lui, n'a pas besoin d'être redondant. Il pourra passer dans un échangeur 20 partagé par l'ensemble des circuits secondaires redondants, ou bien passer dans plusieurs échangeurs 20 dont chacun est associé à un circuit secondaire redondant respectif.

On considère que l'un des accidents les plus sévères qui puisse se produire est l'ouverture d'une brèche de 25 cm dans la branche « froide » du circuit primaire 10, c'est-à-dire dans la section de retour de l'échangeur 14 vers le réacteur 12. Une brèche dans la branche « chaude » du circuit n'est pas envisagée, car la tuyauterie correspondant à la branche chaude est généralement placée à l'intérieur de la tuyauterie de la branche froide pour des raisons d'optimisation thermique. Le diamètre de la brèche correspond au diamètre maximal des tuyaux raccordés au principal tuyau du circuit primaire.

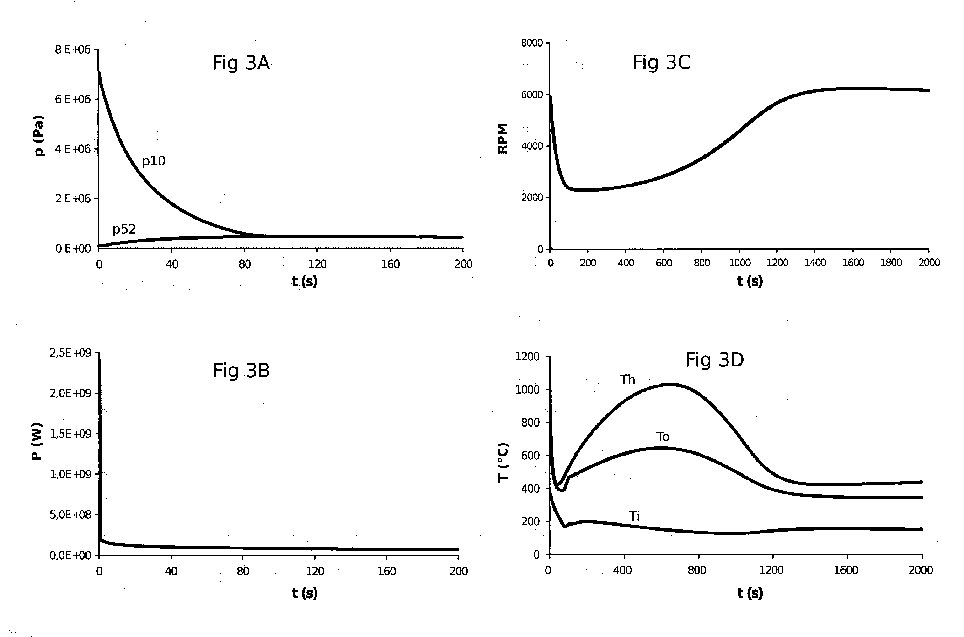

Les figures 3A à 3D représentent des évolutions dans le temps t de plusieurs paramètres à la suite d'un accident du type susmentionné dans un exemple d'installation comportant trois couples de circuits primaire et secondaire redondants. Ces résultats ont été obtenus par simulations effectuées avec le logiciel de thermohydraulique accidentelle système CATHARE2 V25_2.

La figure 3A représente l'évolution de la pression p10 des circuits primaires et de la pression p52 dans l'enceinte rapprochée à la suite de l'ouverture de la brèche dans l'un des circuits primaires. La figure 3B représente l'évolution de la puissance du réacteur. La figure 3C représente l'évolution de la vitesse de rotation des arbres 24'. La figure 3D représente l'évolution de la température maximale de la gaine du combustible Th au coeur du réacteur, de la température de l'hélium en sortie du réacteur To, et de la température de l'hélium en entrée du réacteur Ti.

L'installation fonctionne avec les paramètres suivants à titre d'exemple :
- Circuits primaires et secondaires : hélium pur à 70 bar ;
- Puissance du réacteur : 2400 MW ;
- Vitesse nominale de rotation de chaque arbre 24' : 5900 tours/min ;
- Puissance générée sur les arbres 24' (total) : 134 MW ;
- Températures (°C) :
   o Sortie réacteur : 780° ;
   o Entrée réacteur : 400° ;
   o Entrée turbine 18 : 750° ;
   o Entrée compresseur 22 : 232° ;
- Débit primaire (total) : 1216 kg/s ;
- Débit secondaire (total) : 1122 kg/s.

Avec ces paramètres, on obtient un rendement de 45,6 % par simulation avec le logiciel CYCLOP du CEA.

A partir de t = 0, à la figure 3A, la fuite dans le circuit primaire 10 provoque une chute rapide de la pression p10. La fuite est confinée dans l'enceinte 52, dont la pression p52 se met à augmenter pour s'égaliser avec la pression p10 au bout de 80 s. La pression des circuits secondaires étant asservie à la pression des circuits primaires, la pression des circuits secondaires suit l'évolution de la pression p10.

Cette chute de pression est immédiatement détectée par un automate qui arrête le réacteur par l'introduction de barres de contrôle dans le coeur du réacteur. La puissance du réacteur chute en quelques secondes à une puissance résiduelle de quelques pourcents de la puissance nominale, comme l'illustre la figure 3B. Cette puissance résiduelle doit cependant être évacuée.

Le débit massique du gaz du primaire chute proportionnellement à la chute de pression. Le pouvoir calorifère du gaz chute corrélativement. Ceci combiné à la chute de puissance du réacteur entraîne une chute de la puissance transmise au circuit secondaire, tendant à diminuer la vitesse de rotation de la turbine 18, comme l'illustre la figure 3C.

Néanmoins, comme le pouvoir calorifère du gaz chute plus lentement que la puissance du réacteur, l'échange thermique reste favorable, de sorte que les températures du réacteur se mettent à baisser, comme l'illustre la figure 3D.

Au bout de 80 s, lorsque la pression du gaz dans le circuit primaire atteint sa valeur la plus basse, la vitesse de rotation de la turbine 18 est également à son niveau le plus bas. Les conditions d'évacuation de la chaleur du réacteur sont défavorables, et les températures du réacteur se mettent à augmenter.

Cependant, la vitesse de rotation de la turbine 18 diminuant par rapport à sa valeur nominale, l'alternateur 26 se met à fonctionner en moteur en consommant de l'énergie sur le réseau, ce qui est détecté par un automate comme un évènement interdit. L'automate déconnecte l'alternateur du réseau. Dès cet instant, la turbine n'a plus de puissance à transmettre à l'alternateur, et l'ensemble de la puissance qu'elle produit encore est transmis au compresseur 22 et à la soufflante 16'. Le peu de puissance que le circuit primaire endommagé transfère au secondaire depuis le réacteur suffit à accélérer la rotation de la turbine, donc de la soufflante 16', et à réactiver le transfert thermique par le circuit primaire du réacteur vers le circuit secondaire.

Au fur et à mesure que la vitesse de rotation de la turbine augmente, les températures du réacteur (figure 3D) passent par un maximum et se remettent à diminuer pour rejoindre une valeur basse stable au moment où la vitesse de rotation de la turbine atteint une valeur stable proche de la valeur nominale. A partir de là, l'installation fonctionne normalement à un régime partiel entretenu par la chaleur résiduelle du réacteur.

On s'aperçoit que la température maximale atteinte dans le coeur du réacteur lors de cette phase d'accident est inférieure à la température nominale du coeur en fonctionnement normal. Ainsi, à aucun moment pendant la phase d'accident on n'a approché des conditions dangereuses.

En outre, les opérations à effectuer pour gérer l'accident sont limitées. Il subsiste l'opération consistant à arrêter le réacteur par l'introduction de barres de contrôle. L'opération consistant à déconnecter les alternateurs du réseau est une opération prévue de toute façon en fonctionnement normal pour adapter l'installation aux fluctuations de la demande de puissance sur le réseau.

Le document Proceedings of Gas-Cooled Reactor Information Meeting, Oak Ridge National Laboratory, 27-30 avril 1970, « GAS TURBINE POWER CONVERSION SYSTEMS FOR HELIUM COOLED BREEDER REACTORS » décrit une installation de réacteur comprenant un circuit primaire à hélium et un circuit secondaire à dioxyde de carbone en phases liquide et vapeur. Dans cette installation, une turbine dédiée du circuit secondaire entraîne une soufflante du circuit primaire. Un alternateur et un compresseur sont entraînés par une deuxième turbine indépendante de la turbine dédiée à la soufflante.

On notera que ce type d'installation n'a pas de capacité autonome de refroidissement de secours. En effet, lors d'une diminution de puissance du réacteur à la suite d'un accident, la chaleur transmise au circuit secondaire devient insuffisante pour maintenir le dioxyde de carbone en phase vapeur. Les turbines se noient, notamment celle dédiée à la soufflante, et la soufflante s'arrête, de sorte que le circuit primaire ne peut plus évacuer la chaleur résiduelle du réacteur.

Par conséquent, le gaz utilisé dans le circuit secondaire de l'installation de la figure 2 est de préférence un gaz incondensable, l'hélium étant un exemple.

En revenant sur la figure 2, on constate que l'arbre 24' passe du circuit secondaire 17' au circuit primaire 10 pour entraîner la soufflante 16'. Cet arbre devrait normalement être muni d'un joint tournant qui isole l'un de l'autre les circuits primaire et secondaire. La soufflante 16', dans le cadre de l'exemple susmentionné, consomme une puissance de l'ordre de 17 MW. L'arbre 24' a un diamètre conséquent, il tourne relativement vite (autour de 6000 tours/min), et il doit résister à une température élevée (400°). Avec les pressions utilisées dans les circuits primaire et secondaire d'une installation classique (figure 1), le joint devrait en outre résister à une différence de pression de 5 bar. La conception d'un tel joint est difficile.

Du fait qu'on utilise de l'hélium pur dans le circuit secondaire à la place du mélange hélium/azote de la figure 1, et que la pression du secondaire est égale à la pression du primaire, on utilisera une répartition de puissance entre les circuits secondaire et tertiaire différente de celle de la figure 1 afin d'optimiser le rendement et la taille de la machine. Ainsi, on produit moins de 20 % de la puissance, de préférence de l'ordre de 15 %, dans le circuit secondaire, et le complément dans le circuit tertiaire.

De nombreuses variantes et modifications des modes de réalisation décrits ici apparaîtront à l'homme du métier. Bien que l'on ait décrit de l'hélium comme gaz caloporteur, on pourra utiliser tout autre gaz satisfaisant aux contraintes souhaitées, notamment un gaz qui ne soit pas condensable dans le circuit secondaire.

## Revendications

1. Installation de production d'énergie comprenant :
- un circuit primaire (10) à gaz passant par un réacteur nucléaire (12), un premier échangeur thermique (14), et une soufflante (16') ;
- un circuit secondaire (17') à gaz incondensable passant par le premier échangeur (14), et une turbine (18) et un compresseur (22) montés sur un même arbre (24') ;
**caractérisée en ce que** la soufflante est entraînée par ledit arbre.

2. Installation selon la revendication 1, **caractérisée en ce que** les gaz dans les circuits primaire et secondaire sont à la même pression.

3. Installation selon la revendication 2, **caractérisée en ce que** la pression dans le circuit secondaire est asservie à la pression dans le circuit primaire au moyen d'une soupape reliant le circuit primaire au circuit secondaire.

4. Installation selon la revendication 2, **caractérisée en ce qu'**elle comprend :
- un deuxième échangeur thermique (20) placé dans le circuit secondaire (17') en hélium pur;
- un circuit tertiaire (28) à fluide condensable, passant par le deuxième échangeur, et une turbine (30) et une pompe (32) ;
d'où il résulte que l'énergie produite sur l'arbre de la turbine du circuit tertiaire est supérieure à 80 % de l'énergie totale produite.

5. Installation selon la revendication 2, **caractérisée en ce que** le gaz des circuits primaire et secondaire est de l'hélium à une pression d'environ 70 bar.

6. Installation selon la revendication 1, **caractérisée en ce qu'**elle comprend plusieurs couples redondants de circuits primaire et secondaire, dont les circuits primaires (10, 10b, 10c) passent dans le même réacteur (12).

## Patentansprüche

1. Anlage zur Energieerzeugung, umfassend:
- einen Primärgaskreislauf (10), der über einen Kernreaktor (12), einen ersten Wärmetauscher (14) und ein Gebläse (16') führt;
- einen Sekundärkreislauf (17') mit nicht kondensierbarem Gas, der über den ersten Tauscher (14) sowie eine Turbine (18) und einen Verdichter (22), die an einer gleichen Welle (24') angebracht sind, fahrt;
**dadurch gekennzeichnet, dass** das Gebläse über die Welle angetrieben wird.

2. Anlage nach Anspruch 1, **dadurch gekennzeichnet, dass** die Gase in den Primär- und Sekundärkreislänfen auf gleichem Druck sind.

3. Anlage nach Anspruch 2, **dadurch gekennzeichnet, dass** der Druck in dem Sekundärkreislauf mittels eines Ventils, das den Primärkreislauf mit dem Sekundärkreislauf verbindet, dem Druck in dem Primärkreislauf unterworfen ist.

4. Anlage nach Anspruch 2, **dadurch gekennzeichnet, dass** sie umfasst:
- einen zweiten Wärmetauscher (20), der in dem Sekundärkreislauf (17') aus reinem Helium angeordnet ist;
- einen Tortiärkreislauf (28) mit kondensierbarem Fluid, der über den zweiten Tauscher sowie eine Turbine (30) und eine Pumpe (32) führt;
woraus resultiert, dass die an der Welle der Turbine des Tertiärkreislaufs erzeugte Energie größer als 80 % der erzeugten Gesamtenergie ist.

5. Anlage nach Anspruch 2, **dadurch gekennzeichnet, dass** das Gas der Primär- und Sekundärkreisläufe Helium mit einem Druck von etwa 70 bar ist.

6. Anlage nach Anspruch 1, **dadurch gekennzeichnet, dass** sie mehrere redundante Paare von Primär- und Sekundärkreisläufen umfasst, von denen die Primärkreisläufe (10, 10b, 10c) in den gleichen Reaktor (12) laufen.

## Claims

1. A power production installation comprising:
- a primary circuit (10) containing gas passing via a nuclear reactor (12), a first heat exchanger (14), and a blower (16');
- a secondary circuit (17') containing an incondensable gas passing via the first heat exchanger (14), and a turbine (18) and a compressor (22) fitted on the same shaft (24');
**characterized in that** the blower is driven by said shaft.

2. The installation according to claim 1, **characterized in that** the gases in the primary and secondary circuits are of the same nature and are at the same pressure.

3. The installation according to claim 2, **characterized in that** the pressure in the secondary circuit is automatically regulated by the pressure in the primary circuit.

4. The installation according to claim 1, **characterized in that** it comprises:
- a second heat exchanger (20) placed in the secondary circuit (17');
- a tertiary circuit (28) containing a condensable fluid, passing via the second heat exchanger, and a turbine (30) and a pump (32);
the elements of the secondary and tertiary circuits being dimensioned so as to the energy produced on the shaft of the turbine of the tertiary circuit be more than 80 % of the total power produced.

5. The installation according to claim 2, **characterized in that** the gas of the primary and secondary circuits is helium at a pressure of about 70 bar.

6. The installation according to claim 1, **characterized in that** it comprises several redundant couples of primary and secondary circuits, the primary circuits (10, 10b, 10c) of which pass in the same reactor (12).
